# EUROPEAN PATENT SPECIFICATION

(11) **EP 2 694 286 B1**
(45) Date of publication and mention of the grant of the patent: **19.12.2018**
(21) Application number: 12767231.9
(22) Date of filing: 04.04.2012
(51) Int. Cl.: B32B 15/08, C23C 14/14, C25D 5/02, B05D 3/06, B05C 1/08

(54) **PANEL WITH ANTI-FINGERPRINT PROPERTY AND MANUFACTURING METHOD THEREOF**
TAFEL MIT FINGERABDRUCKRESISTENZ UND HERSTELLUNGSVERFAHREN DAFÜR
PANNEAU AVEC PROPRIÉTÉ ANTI-EMPREINTES ET PROCÉDÉ POUR SA FABRICATION

(30) Priority: 05.04.2011 KR 20110031395; 05.04.2011 KR 20110031396
(43) Date of publication of application: 12.02.2014
(73) Proprietor: LG Electronics Inc., Yeongdeungpo-gu Seoul 150-721 (KR)
(72) Inventor: JUNG, Hyungi, Changwon-si Gyeongsangnam-do 641-711 (KR); JUNG, Dongju, Changwon-si Gyeongsangnam-do 641-711 (KR); KIM, Youngkyu, Changwon-si Gyeongsangnam-do 641-711 (KR); SON, Youngbok, Changwon-si Gyeongsangnam-do 641-711 (KR)
(74) Representative: Vossius & Partner Patentanwälte Rechtsanwälte mbB
(86) International application number: PCT/KR2012/002529
(87) International publication number: WO 2012/138122

(56) References cited:
- JP-A- 2000 000 514
- JP-A- 2006 188 739
- JP-A- 2009 293 129
- DATABASE WPI Week 198548 Thomson Scientific, London, GB; AN 1985-299624 XP002729089, & JP S60 206640 A (SHARP KK) 18 October 1985 (1985-10-18)

## Description

### TECHNICAL FIELD

The present disclosure relates to a panel with an anti-fingerprint property and a manufacturing method thereof.

### BACKGROUND ART

An external cabinet of home alliances, such as a refrigerator or a washing machine, uses a panel made of various materials. One of widely used materials for the cabinet of the home alliances is a Vinyl Coated Material (VCM). The VCM refers to a form of a film having a predetermined pattern attached onto a surface of a base material. The VCM has advantages in view of representation of various textures depending on patterns and production with a low cost.

Especially, the VCM having a type of patterns that aluminum is printed or deposited on a surface of a film is widely used in home electronics, such as a refrigerator or a washing machine. The VCM having such aluminum patterns may be processed to have hairlines which an aluminum material has, so as to provide very similar texture to an actual aluminum material.

For home alliances using the VCM, intensity of a film is lower than that of a base material formed of a metal or resin, which may cause such home alliances to be fragile to scratch. Accordingly, a high glossy hard coating layer is formed through UV curing for surface protection. The high glossy hard coating layer has advantages of increasing intensity of a product surface and making the product more attractive, but also has disadvantages of being easily stained with fingerprints and the fingerprints being visibly caught. Hence, there is a problem that the product looks dirty unless its surface is frequently wiped.

To avoid these disadvantages, an anti-fingerprint coating layer is even formed on the surface of the hard coating layer. The formation of the anti-fingerprint coating layer is able to prevent contamination due to fingerprints to some degree, but merely reduces the degree that the fingerprints are left without perfectly preventing the contamination due to the fingerprints, and increases a material processing cost.

In addition, the anti-fingerprint coating layer, which has a relatively lower intensity than the high glossy coating layer, is located on the top of a material, thereby causing the material to be vulnerable to scratch.

In the meantime, in some cases, the home electronics may have a cabinet with a structure that a surface of a panel, which is made of carbon steel or stainless steel other than the VCM, is exposed directly to the exterior.

In order to make such cabinet have more attractive appearance, various kinds of colors are even provided. The cabinet may have entirely the same color or a color with two or more tones for enhancing luxuriousness. As a method for allowing the surface of the metal panel to have various kinds of colors, it may be considered that a paint having two or more colors be coated on the surface of the panel. However, this exhibits low durability and appearance quality, and accordingly it is not used for high-quality products.

As another method, gravure roll printing is performed on a surface of a transparent film to have a two-tone color, and the film is attached onto a surface of a panel. This method is better than the former method in view of surface quality and durability, but difficult to exhibit texture belonging to a material itself such as stainless steel. Furthermore, when the printing is performed with respect to the surface of the film, a stepped portion is generated between a printed portion and a non-printed portion.

Thus, it is preferable to coat a coating material using a roll for fast processing and even surface quality. However, when there is such stepped portion is present, there is high possibility of a cosmetic defect being caused at the stepped portion. In addition, the coating material is coated merely in a spraying manner, which results in difficulty in obtaining even surface quality and an increase in a time spent for a coating process.

In addition, a processing, such as bending, is allowed during mechanical working. However, for deep drawing, a film is destroyed and separated from a surface, which causes a limitation in a processing method to be applicable.

In DATABASE WPI Week 198548, Thomson Scientific, London, GB; AN 1985-299624; XP002729089 & JP-S60-206640 A, a decorative steel sheet comprising polyvinylchloride (PVC) sheet having printing patterns and/or embossing which is bonded to steel sheet, and translucent clear coatings applied on to the PVC sheet and cured at ordinary temperature are disclosed.

JP 2006 188739 A describes an aluminum cast molded article with film, and its manufacturing method, wherein in a throttle body, a passivation film and a corrosion resistant film are laminated in this order on a substrate composed of aluminum.

JP 2009 293129 is directed to a method of metallic surface corrosion protection, wherein the metallic surface should consist of at least 90% zinc, aluminum and/or magnesium and/or alloys of these metals with each other or with other alloy components, in relation to the metallic surface.

JP 2000 000514 A describes metallic coat formation being carried out by applying a thermosetting organic solvent type base coating material containing a neutralized material of a hydroxyl group-containing resin with acid value of 5-100 mg KOH/g and a cross-linking agent to a face to be coated, applying an aqueous dispersion of an aluminum flake pigment to the face bearing the uncured base coating material, and then applying a clear coating material to the face.

### DISCLOSURE OF THE INVENTION

Therefore, to obviate those problems, an aspect of the detailed description is to provide a film-attached panel having an anti-fingerprint property, capable of minimizing contamination due to fingerprints even without forming a high-priced anti-fingerprint coating layer.

Another aspect of the detailed description is to provide a method for manufacturing a film-attached panel.

To achieve these and other advantages and in accordance with the purpose of the present invention, as embodied and broadly described herein, there is provided a film-attached panel including a base material, a base layer attached on a surface of the base material, an aluminum deposition layer attached on the base layer, the aluminum deposition layer being processed to have hairlines, a passivation layer disposed on the aluminum deposition layer, and a glossy coating layer formed on the passivation layer, wherein a depth of the hairline processed on the aluminum deposition layer may be in the range of 0.25 to 0.35 µ.

In the aspects of the present disclosure, by recognizing that fingerprints are rarely visibly caught even if the fingerprints are left on the surface of the panel when the gloss of the glossy coating layer is adjusted even without a separate anti-fingerprint coating layer, factors affecting the gloss may be controlled to give an anti-fingerprint property. In detail, a user may not feel difference of gloss with the naked eyes when the gloss is in the range of 130 to 170 based on gloss of 60, but there is a definite difference in the anti-fingerprint property, more particularly, a degree that a fingerprint is visibly caught. Accordingly, when the hairline depth of the aluminum layer is adjusted into the range of 0.25 to 0.35 µm, a level of scattered reflection is increased so as to lower the gloss, but the fingerprint is not visibly identified and the anti-fingerprint property is remarkably improved.

In addition, a lightness of the aluminum deposition layer may have a value in the range of 41 to 49. The lightness denotes a level of brightness of a color, and a white color has a value of 100 while a black color having a value of 0. In general, when forming an aluminum pattern, the lightness value is set to 41 or 42. When the lightness is set to the value, there is no great difference in lightness recognized with the naked eye of a user but the anti-fingerprint property is improved.

The glossy coating layer may be formed by coating a UV curing coating solution, followed by UV curing therefor, and a matting agent may be added into the UV curing coating solution. Here, it may also be considered that a UV curing layer be formed by adding a matting agent into the UV curing coating solution. The matting agent may serve to reduce the gloss of the UV curing layer, which may result in improvement of the anti-fingerprint property.

Here, the matting agent may include one of silica or Polyethylene (PE) wax. Besides, a content of solid contained in the UV curing coating solution may increase to adjust the gloss.

In the meantime, the base layer may be formed of Polyvinyl Chloride (PVC).

The passivation layer may be formed of Polyethylene Terephthalate (PET).

A primer layer may be additionally formed between the passivation layer and the glossy coating layer.

In another aspect of the present disclosure, there is provided a method for manufacturing a film-attached panel including printing or depositing an aluminum layer on a base layer, processing the formed aluminum layer to have hairlines with a depth in the range of 0.25 to 0.35 microns, forming a passivation layer on the processed aluminum layer, coating the passivation layer with a UV curing coating solution, curing the UV curing coating solution by irradiation of infrared rays, and attaching the base layer on a surface of a base material.

Here, a matting agent may be added into the UV curing coating solution.

The aluminum layer may have lightness in the range of 45 to 49.

In those aspects of the present disclosure having the configurations, the anti-fingerprint property of the panel can be improved more than the related art even without a separate anti-fingerprint coating layer, which may result in reduction of a manufacturing cost.

In addition, since the glossy coating layer is located on the uppermost layer, the panel can have the anti-fingerprint property with being resistant to scratch.

### BRIEF DESCRIPTION OF THE DRAWINGS

FIG. 1 is a sectional view of a film-attached panel having an anti-fingerprint property in accordance with one exemplary embodiment;
FIG. 2 is a flowchart showing a process of performing a surface processing for a metal panel to have a two-tone color in accordance with a manufacturing method for a metal panel; and
FIG. 3 is a flowchart showing a process of performing a surface processing for a metal panel to have a three-tone color in accordance with a manufacturing method for a metal panel.

### MODES FOR CARRYING OUT THE PREFERRED EMBODIMENTS

Embodiments of the present invention will be described below in detail with reference to the accompanying drawings where those components are rendered the same reference number that are the same or are in correspondence, regardless of the figure number, and redundant explanations are omitted. In describing the present invention, if a detailed explanation for a related known function or construction is considered to unnecessarily divert the gist of the present invention, such explanation has been omitted but would be understood by those skilled in the art. The accompanying drawings are used to help easily understood the technical idea of the present invention and it should be understood that the idea of the present invention is not limited by the accompanying drawings. The idea of the present invention should be construed to extend to any alterations, equivalents and substitutes besides the accompanying drawings.

Hereinafter, description will be given of an exemplary embodiment of a film-attached panel having an anti-fingerprint property with reference to the accompanying drawing.

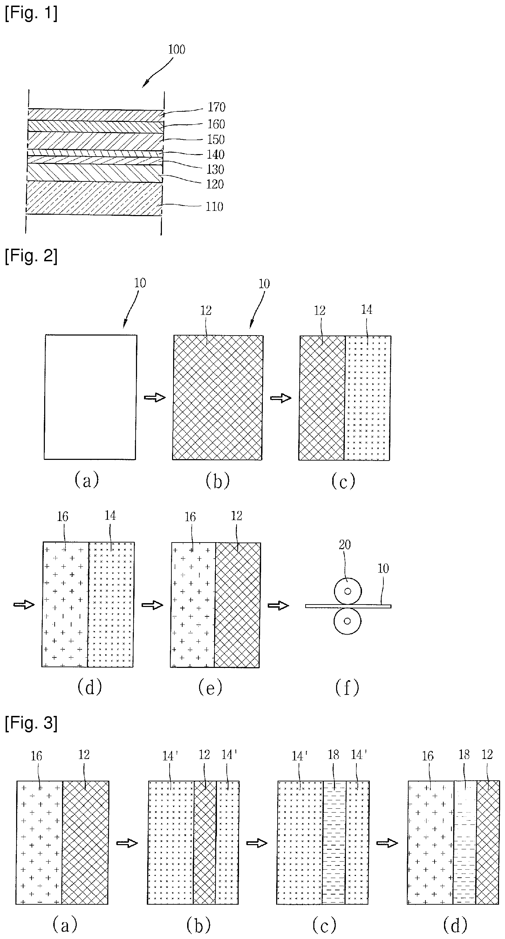

FIG. 1 is a sectional view of a film-attached panel in accordance with one exemplary embodiment of the present disclosure. The film-attached panel 100 may be implemented by forming an aluminum pattern layer on a surface of Electrolytic Galvanized Iron (EGI) as a base material. In detail, a Polyvinyl Chloride (PVC) layer 120, which serves as a base layer of the aluminum pattern layer, is formed on an upper surface of a base material 110. The PVC layer 120 may cover scratches or surface unevenness existing on the surface of the base material 110 such that the aluminum pattern layer can be evenly formed, and also function to prevent the aluminum paternal layer from being easily separated.

The aluminum pattern layer 130 may be formed on an upper surface of the PVC layer 120. The aluminum pattern layer 130 may be formed by being printed or deposited on the surface of the PVC layer 120. Here, lightness (brightness) of the aluminum pattern layer 130 is generally set to have a value of 41 or 42 to be similar to actual aluminum, but the one exemplary embodiment forms the aluminum pattern layer 130 to have lightness with a value in the range of 45 to 49. Strictly speaking, the lightness value is different from a color of the actual aluminum. However, the difference is not so great that a user feels difficult to visibly identify it. On the contrary, the exemplary embodiment exhibits a remarkably improved anti-fingerprint property as compared with the case of the lightness value being set to 41 or 42.

After forming the aluminum pattern layer 130, a hairline processing layer 140 may be formed on the surface of the aluminum pattern layer 130. The hairline processing layer 140 may be formed by polishing the upper portion of the generated aluminum pattern layer 130 using a polishing belt having a predetermined hairline pattern, thus to have a depth in the range of 0.25µ to 0.35µ. Upon polishing the hairline to have such depth, no great difference is observed in gloss that the user feels, but scattered reflection is increased on the aluminum pattern layer having the hairlines formed thereon, which makes the fingerprints left on the surface rarely visually caught.

Here, a detailed depth may be randomly decided within the range according to a thickness or component of a UV coating layer which will be finally formed. As aforementioned, the anti-fingerprint property is improved but the gloss is lowered when the depth increases, whereas the anti-fingerprint property is lowered and the gloss increases when the depth is reduced. Hence, the depth may be increased or decreased by considering the gloss and anti-fingerprint property requirements.

On the hairline processing layer 140 may be formed a Polyethylene Terephthalate (PET) layer 150 as a passivation layer for protecting the aluminum pattern layer. The PET layer 150 is transparent in view of the material property, and accordingly the user can feel color and texture of the aluminum pattern layer as they are.

A primer layer 160, which is for stable formation of a UV-cured coating layer to be explained later, may be formed on the PET layer 150. The primer layer 160 may fill up cosmetic defect, scratch or the like, which may be present on the PET layer 150, and thus serve to improve an adhesive force with the UV-cured coating layer.

A UV-cured coating layer 170 may be formed on the primer layer 160. The UV-cured coating layer 170 may be formed by depositing a UV curing solution on the surface of the primer layer 160 and curing the UV curing solution by irradiation of infrared rays. Here, the UV curing solution may contain oligomer, monomer, solvent, photo initiator and other additives. When the infrared rays are applied, the photo initiator is polymerized by energy of the infrared rays and accordingly the oligomer and the monomer are polymerized in a sequential manner. Consequently, polymers having transparency and high intensity remain on the primer layer 160 so as to define the UV-cured coating layer.

Here, the other additives may include a matting agent. The matting agent may be one of silica or Polyethylene (PE) wax, and serve to reduce gloss with remaining within the completed polymers.

In the exemplary embodiment, the PVC layer, the PET layer and the primer layer may be omitted in some cases. In addition, the depth of the hairline processed, the lightness of the aluminum and use or non-use of the matting agent or a content of the matting agent may have influence on the gloss and the anti-fingerprint property, so a part or all of those factors may be employed.

FIG. 2 is a process flowchart schematically showing a metal panel processed according to a first example of a manufacturing method for a metal panel. A panel to be processed in the first example is made of stainless steel. The stainless steel has excellent corrosion resistance and is widely used in relatively high-priced products of home electronics by virtue of attractive appearance of the material itself.

The stainless steel has gloss on its surface according to a processing method. In general, the stainless steel supplied from the market is supplied in the state with the gloss. FIG. 2A shows a stainless steel base material 10 exhibiting the gloss. When gloss is present on a surface, fingerprints are easily visible due to a great difference in lightness between a fingerprint-left portion and a fingerprint-not-left portion even if the surface is coated with an anti-fingerprint coating layer. Accordingly, a process of removing the gloss is performed prior to a coloring process.

To remove the gloss from the surface of a metal, sandblasting, etching, embossing or the like may be employed. The gloss can thusly be removed by forming a rough surface on the surface of the stainless steel through the processing. The level of removing the gloss may be randomly set by a skilled person in the art according to the property of the anti-fingerprint coating layer.

An acid-resistant ink 14 may be coated on a partial surface of the base material 10 having the rough surface 12. The acid-resistant ink 14 may serve to prevent the base material 10 (the rough surface 14) from contacting an electrolyte during electrolytic coloring, and a portion coated with the acid-resistant ink 14 may maintain the rough surface 12 as it is.

After completion of coating the acid-resistant ink 14, the base material 10 having the rough surface 12 may be settled in the electrolyte and the electrolytic coloring may accordingly be performed therefor. Once the electrolytic coloring is performed, a portion without being coated with the acid-resistant ink 14 may contact the electrolyte, thereby forming an oxide. A color of the oxide may depend on a type of the electrolyte, and examples of the color to be obtained may include brown, gold, red, blue, green and black colors. Here, the color may differ according to a luminance of the rough surface 12. That is, an intermediate color may be obtained according to the luminance, as compared to performing the electrolytic coloring for a glossy surface, accordingly, more various colors can be represented.

Since the oxide has a thickness below approximately 1 µ, there is not present a stepped portion from a portion without the oxide generated. In addition, the representation of a specific color by the oxide results from interference between the generated oxide and light. Accordingly, a different color is obtained according to the property of the oxide. Such color is a color of the steel itself other than a color obtained by using a separate pigment or dye. Therefore, the color can be eco-friendly and a lifespan of the color can be semi-permanent rather than a paint film formed by painting.

When a colored surface 16 is obtained through the electrolytic coloring, the acid-resistant ink 14 may be removed and a washing process may be carried out, thereby obtaining a stainless panel having a two-tone color. The obtained panel is consecutively coated through a roll-to-roll processing, thereby having an anti-fingerprint coating layer on its surface. The roll-to-roll processing is to consecutively form a coating layer on the surface of the panel using a roller 20. In case where a stepped portion is present at a boundary surface between two colors, a surface defect may easily be caused, so the roll-to-roll processing may be impossible to be applied to the case. However, in the exemplary embodiment, the stepped portion between the boundary surfaces may be removed through the electrolytic coloring, which may result in consecutively generation of the high-quality anti-fingerprint coating layer with low costs.

Additionally, as aforementioned, the colored surface 16 is not obtained by attaching a separate paint film or the like, but is the base material itself, so the panel of the present disclosure can be processed by a processing method, such as a deep drawing, exhibiting a high variation rate of the base material, in addition to bending.

Meanwhile, the manufacturing method may be applied to a case having a color with two or more tones. FIG. 3 is a process flowchart showing a surface processing for a metal to have a three-tone color.

FIG. 3A corresponds to a step prior to forming an anti-fingerprint coating layer of those steps shown in FIG. 2, namely, a state shown in FIG. 2E. In this state, the half of the panel is in a gloss-matted state, and the other half thereof is in a coloring-processed state. Under this state, in order to form a colored surface with a different color from the colored surface 16 on a part of the rough surface 12, an acid-resistant ink 14' is re-coated on a half of the rough surface 12 and the colored surface 16.

Afterwards, when a second electrolytic coloring is performed, a portion of the rough surface 12, on which the acid-resistant ink 14' is not coated, is colored. For explanation, this portion is referred to as 'second colored surface 18.' An electrolyte used upon the secondary electrolytic coloring is different from the electrolyte used upon the first electrolytic coloring. Therefore, the colored surface 16 and the second colored surface 18 have different colors from each other.

Under this state, when the acid-resistant ink 14' is removed, a stainless panel having three colors can be obtained as shown in FIG. 3D. Afterwards, an anti-fingerprint coating layer may be formed on the surface of the panel according to the roll coating as shown in FIG. 2.

## Claims

1. A film-attached panel comprising:
a base material (110);
a base layer (120) attached on a surface of the base material (110);
an aluminum pattern layer (130) attached on the base layer (120), the aluminum pattern layer (130) being processed to have hairlines (140);
a passivation layer (150) disposed on the aluminum pattern layer (130); and
a glossy coating layer (170) formed on the passivation layer (150),
wherein a depth of each of the hairlines (140) processed on the aluminum pattern layer (130) is in the range of 0.25 to 0.35 microns so that scattered reflection is increased on the aluminum pattern layer (130) having the hairlines (140) formed thereon,
wherein the aluminum pattern layer (130) has a lightness value in the range of 45 to 49 to be greater than a lightness value of 41 or 42 similar to actual aluminum, and
wherein the glossy coating layer (170) is formed by coating a UV curing coating solution, followed by UV curing therefor, and a matting agent is added into the UV curing coating solution.

2. The panel of claim 1, wherein the matting agent comprises one of silica or Polyethylene (PE) wax.

3. The panel of claim 1 or 2, wherein the base layer (120) is made of Polyvinyl Chloride (PVC).

4. The panel of any one of claims 1, 2 and 3, wherein the passivation layer (150) is made of Polyethylene Terephthalate (PET).

5. A method for manufacturing a film-attached panel comprising:
printing or depositing an aluminum pattern layer (130) on a base layer (120), the aluminum pattern layer (130) having a lightness value in the range of 45 to 49 to be greater than a lightness value of 41 or 42 to be similar to actual aluminum;
processing the formed aluminum pattern layer (130) to have hairlines (140) with a depth in the range of 0.25 to 0.35 microns so that scattered reflection is increased on the aluminum pattern layer (130) having the hairlines (140) formed thereon;
forming a passivation layer (150) on the processed aluminum pattern layer (130);
coating the passivation layer (150) with a UV curing coating solution comprising a matting agent;
curing the UV curing coating solution by irradiation of infrared rays; and
attaching the base layer (120) on a surface of a base material (110).

## Patentansprüche

1. Platte mit befestigtem Film, die aufweist:
ein Grundmaterial (110);
eine Grundschicht (120), die auf einer Oberfläche des Grundmaterials (110) befestigt ist;
eine Aluminium-Musterschicht (130), die an der Grundschicht (120) befestigt ist, wobei die Aluminium-Musterschicht (130) so bearbeitet ist, dass sie Haarlinien (140) aufweist;
eine Passivierungsschicht (150), die auf der Aluminium-Musterschicht (130) angeordnet ist; und
eine glänzende Überzugsschicht (170), die auf der Passivierungsschicht (150) ausgebildet ist,
wobei eine Tiefe von jeder der Haarlinien (140), die auf der Aluminium-Musterschicht (130) bearbeitet sind, im Bereich von 0,25 bis 0,35 Mikrometern liegt, so dass eine gestreute Reflexion auf der Aluminium-Musterschicht (130) erhöht wird, die die darauf ausgebildeten Haarlinien (140) aufweist,
wobei die Aluminium-Musterschicht (130) einen Helligkeitswert im Bereich von 45 bis 49 aufweist, der größer als ein Helligkeitswert von 41 oder 42 ähnlich zu tatsächlichem Aluminium sein soll, und
wobei die glänzende Überzugsschicht (170) durch Beschichten einer UV-härtenden Beschichtungslösung, gefolgt von einer UV-Härtung dafür gebildet wird, und ein Mattierungsmittel in die UV-härtende Beschichtungslösung hinzugefügt ist.

2. Platte nach Anspruch 1, wobei das Mattierungsmittel Silika oder Polyethylen- (PE-) Wachs aufweist.

3. Platte nach Anspruch 1 oder 2, wobei die Grundschicht (120) aus Polyvinylchlorid (PVC) besteht.

4. Platte nach einem der Ansprüche 1, 2 und 3, wobei die Passivierungsschicht (150) aus Polyethylenterephthalat (PET) gebildet ist.

5. Verfahren zum Herstellen einer Platte mit befestigtem Film, das aufweist:
Drucken oder Abscheiden einer Aluminium-Musterschicht (130) auf einer Grundschicht (120), wobei die Aluminium-Musterschicht (130) einen Helligkeitswert im Bereich von 45 bis 49 aufweist, der größer als ein Helligkeitswert von 41 oder 42 sein soll, um ähnlich zu tatsächlichem Aluminium zu sein;
Bearbeiten der gebildeten Aluminium-Musterschicht (130), um Haarlinien (140) mit einer Tiefe im Bereich von 0,25 bis 0,35 Mikrometern zu erhalten, so dass eine gestreute Reflexion auf der Aluminium-Musterschicht (130) erhöht wird, die die darauf ausgebildeten Haarlinien (140) aufweist;
Bilden einer Passivierungsschicht (150) auf der bearbeiteten Aluminium-Musterschicht (130);
Beschichten der Passivierungsschicht (150) mit einer UV-härtenden Beschichtungslösung, die ein Mattierungsmittel aufweist;
Härten der UV-härtenden Beschichtungslösung durch Bestrahlung mit Infrarotstrahlen; und
Befestigen der Grundschicht (120) auf einer Oberfläche eines Grundmaterials (110).

## Revendications

1. Panneau à film adhérent, comprenant :
un matériau de base (110) ;
une couche de base (120) fixée sur une surface du matériau de base (110) ;
une couche de motif en aluminium (130) fixée sur la couche de base (120), ladite couche de motif en aluminium (130) étant traitée pour présenter des craquelures (140) ;
une couche de passivation (150) disposée sur la couche de motif en aluminium (130) ; et
une couche de revêtement brillante (170) formée sur la couche de passivation (150),
où la profondeur de chacune des craquelures (140) ménagées sur la couche de motif en aluminium (130) est comprise entre 0,25 et 0,35 microns, de manière à accroître une réflexion diffusée sur la couche de motif en aluminium (130) où sont formées les craquelures (140),
où la couche de motif en aluminium (130) a un indice de luminosité compris entre 45 et 49, de manière à être supérieur à un indice de luminosité de 41 ou 42 pour être comparable à l'aluminium courant, et
où la couche de revêtement brillante (170) est formée par revêtement d'une solution de revêtement durcissable par UV, suivie d'un durcissement par UV correspondant, et un agent de matité est ajouté à la solution de revêtement durcissable par UV.

2. Panneau selon la revendication 1, où l'agent de matité comprend de la silice ou une cire de polyéthylène (PE).

3. Panneau selon la revendication 1 ou la revendication 2, où la couche de base (120) est en polychlorure de vinyle (PVC).

4. Panneau selon l'une des revendications 1, 2 et 3, où la couche de passivation (150) est en polytéréphtalate d'éthylène (PET).

5. Procédé de fabrication d'un panneau à film adhérent, comprenant :
l'impression ou le dépôt d'une couche de motif en aluminium (130) sur une couche de base (120), la couche de motif en aluminium (130) ayant un indice de luminosité compris entre 45 et 49, de manière à être supérieur à un indice de luminosité de 41 ou 42 pour être comparable à l'aluminium courant ;
le traitement de la couche de motif en aluminium (130) formée pour obtenir des craquelures (140) ayant une profondeur comprise entre 0,25 et 0,35 microns, de manière à accroître la réflexion diffusée sur la couche de motif en aluminium (130) où sont formées les craquelures (140) ;
la formation d'une couche de passivation (150) sur la couche de motif en aluminium (130) traitée ;
le revêtement de la couche de passivation (150) avec une solution de revêtement durcissable par UV comprenant un agent de matité ;
le durcissement de la solution de revêtement durcissable par UV par irradiation de rayons infrarouges ; et la fixation de la couche de base (120) sur la surface d'un matériau de base (110).
